Europäisches Patentamt

European Patent Office

Office européen des brevets

(11) Publication number: **0 182 668**
**B1**

(12) **EUROPEAN PATENT SPECIFICATION**

(45) Date of publication of patent specification: **05.09.90**

(21) Application number: **85308487.9**

(22) Date of filing: **21.11.85**

(51) Int. Cl.⁵: **H 04 N 5/228**

(54) **Automatic beam current control systems for television cameras.**

(30) Priority: **22.11.84 JP 247738/84**

(43) Date of publication of application:
**28.05.86 Bulletin 86/22**

(45) Publication of the grant of the patent:
**05.09.90 Bulletin 90/36**

(84) Designated Contracting States:
**AT DE FR GB NL**

(56) References cited:
**EP-A-0 157 527**
**US-A-3 999 011**

(73) Proprietor: **SONY CORPORATION**
**7-35 Kitashinagawa 6-Chome Shinagawa-ku**
**Tokyo 141 (JP)**

(72) Inventor: **Tanaka, Sadaaki c/o Patents Division**
**Sony Corporation 6-7-35 Kitashinagawa**
**Shinagawa-ku Tokyo 141 (JP)**
Inventor: **Ushijma, Hisashi c/o Patents Division**
**Sony Corporation 6-7-35 Kitashinagawa**
**Shinagawa-ku Tokyo 141 (JP)**

(74) Representative: **Cotter, Ivan John**
**D. YOUNG & CO. 10 Staple Inn**
**London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to automatic beam current control systems for television cameras.

Generally, in a photo-electric conversion type television camera tube, the amplitude or quality of an electron beam is restricted from a resolution standpoint. However, if the amplitude of the electron beam is constant, a lack of beam amplitude is caused in a bright portion of a photo-electric conversion screen of an image pickup tube or television camera tube having a large amount of incident light thereon, whereby all of the signal charges thereon cannot be derived. This causes so-called white compression and a residual image phenomenon on a picture.

Therefore, the prior art has made use of a beam amplitude or magnitude control technique in which, of the output signals from the television camera tube, a signal corresponding to a bright portion of an object is fed back to a beam current control electrode of the television camera tube, whereby the beam current or amplitude is increased at the bright portion of the object so as thereby to avoid the lack of beam amplitude. Such a technique is disclosed, for example, in US Patent No. US—A—2 930 929 (Shelton) entitled "Automatic beam control for television camera tubes". A beam current is detected from a photo-electric conversion screen (target) and a control voltage corresponding to the beam current is fed back to a grid.

According to this technique, since the beam current can be controlled in response to the signal charge (corresponding to the brightness of an object) generated on the photo-electric conversion screen, the signal charges on the photo-electric conversion screen can be erased uniformly. Therefore, this technique represents an important step forward in the art in that it enables avoidance of the lack of beam quality.

US Patent No. US—A—3 999 011 (Sato et al) entitled "Method and system for controlling electron beam quantity in camera tube" discloses an improvement of the technique of US—A—2 930 929 in which a beam current is increased only in a portion in which the brightness exceeds a predetermined brightness.

It should be noted that an increase of the beam current means that the diameter of the electron beam becomes larger. In other words, when the beam current is varied, the diameter of beam also is varied. Therefore, the beam spot produced on the photo-electric conversion screen also is varied.

If the beam amplitude or quantity is controlled only in such a manner that a signal corresponding to the bright portion of the object is fed back to the beam current control electrode, the following defects will occur.

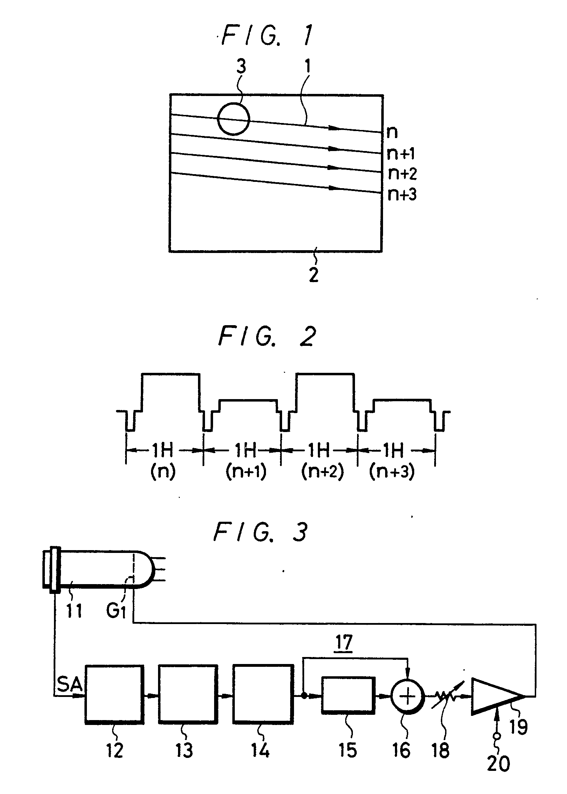

When an electron beam 1 scans a photo-electric conversion screen 2 as shown in Figure 1 of the accompanying drawings, if the beam, while it is scanning a line n, is increased in amplitude or quantity due to an increase of the beam current by a beam amplitude control operation and the diameter of beam becomes as large as is shown by a reference numeral 3 in Figure 1, the beam 1 will scan an adjacent line n+1 at the same time. In this state, the signal from the television camera tube becomes the sum of signals from the lines n and n+1, thereby increasing the level of the signal. Accordingly, the beam amplitude control feature will increase the beam amplitude. Next, when the beam 1 scans the line n+1, the line n+1 already has been scanned by the electron beam 1 so that the level of the output signal from the television camera tube is decreased. Thus, the beam amplitude control is not carried out properly and the control signal adopts a reference bias value.

When the electron beam 1 scans a line n+2, the scanning operation of the electron beam 1 becomes the same as that carried out when the electron beam 1 scanned the line n. Further, when the electron beam 1 scans a line n+3, the scanning operation of the electron beam 1 becomes the same as that carried out when the electron beam 1 scanned the line n+1. As a result, positive feedback is applied and an oscillation therefore is caused. The output signal at that time is shown in Figure 2 of the accompanying drawings, where the intervals represented as 1H are successive line scan periods.

The oscillation, when the electron beam 1 scans the scanning line including the adjacent scanning line, appears as a $\frac{1}{2}f_H$ mode (line crawl mode), where $f_H$ is the horizontal frequency.

In order to avoid such oscillation, it is known from US Patent No. US—A—3 999 011 to insert a non-linear circuit into a feedback loop which feeds back the output signal of the television camera tube to its beam current control electrode or to form a negative feedback loop by the detection of a returned electron beam.

In the case of the former technique, it is very cumbersome to adjust the feedback quantity and to adjust a predetermined signal level of the output signal from the television camera tube at which the beam quantity should be increased. The latter technique cannot be applied to a Gunn diode type image pickup tube or camera tube.

As will be clear from the principle underlying the above-mentioned oscillation, since the diameter of the electron beam is varied in response to the beam amplitude or the like, the beam amplitude can be adjusted at a certain point in time but the oscillation or the insufficiency of beam amplitude will occur at another point in time after a certain time has elapsed. Thus, the latter technology is considerably lacking in stability, including a secular variation.

According to one aspect of the present invention there is provided an automatic beam current control system for a television camera in which a beam current is detected from a target electrode of a camera tube and a beam current control signal is supplied to a beam current control electrode of the camera tube so as thereby to control the beam current, the system comprising:

beam current detecting means for detecting a beam current from a target current delivered from the target electrode of the camera tube;

wave reshape means connected to the beam current detecting means for reshaping a waveform by a non-linear circuit;

line adder means connected to the wave reshape means for generating a beam current control signal by adding a signal of a line scanned by an electron beam and a signal of a line near the former line; and

beam current control electrode drive means connected to be supplied with the beam current control signal for generating an electron beam of a predetermined intensity.

Preferred automatic beam current control systems embodying the invention and described hereinbelow enable a picked-up image signal of high definition to be produced. Further, the picked-up image signal has no line crawl component. To this end, the system includes a feedback loop which controls a beam current by using a target current, whereby a proper beam current can be produced stably.

According to another aspect of the present invention, in an image pickup apparatus in which a beam amplitude is controlled so as to correspond to variations of the amount of light incident thereon by supplying a signal corresponding to a target current of a television camera tube to a beam current control electrode of the television camera tube, there is provided an automatic beam current control system for the television camera in which the signal corresponding to the target current is supplied through a line adder circuit to the beam current control electrode of the television camera tube.

The invention will now be further described, by way of illustrative and non-limiting example, with reference to the accompanying drawings, in which like references designate like elements and parts throughout, and in which:

Figures 1 and 2 are diagrams for explaining the principle underlying an oscillation of a beam amplitude control loop;

Figure 3 is a block diagram showing an automatic beam current control system embodying the invention for a television camera;

Figure 4 is a waveform diagram useful for explaining the operation of the system of Figure 3; and

Figures 5 and 6 are block diagrams showing parts of respective further automatic beam current control systems embodying the invention for television cameras.

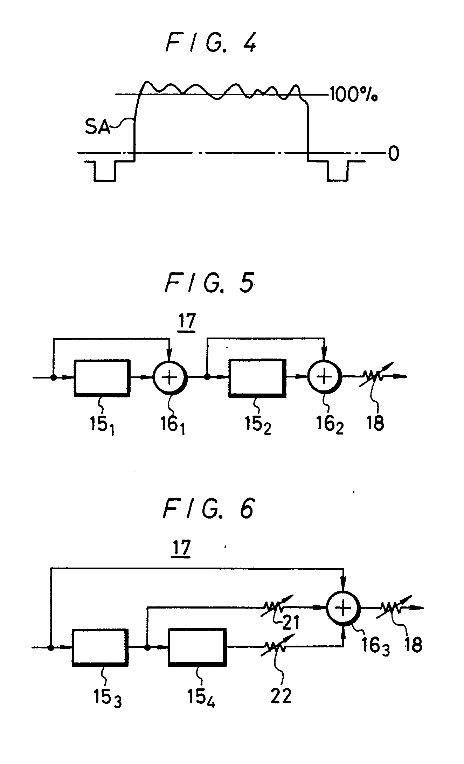

Figure 3 is a block diagram showing an automatic beam current control system embodying the invention for a television camera. Referring to Figure 3, an output signal SA (see also Figure 4) from an image pickup tube or television camera tube 11, which corresponds to a beam current detected from a target electrode (for example, a photo-electric conversion screen) of the tube, is supplied to a pre-amplifier 12 and thereby amplified, and then is fed to a slice circuit 13. The slice circuit 13 derives a part of the output signal SA having a level higher than a 100% level shown in Figure 4. The output signal from the slice circuit 13 is supplied to a white clip circuit 14 in which a signal portion of higher than a predetermined level is clipped. The white clip circuit 14 is used because the electron beam amplitude or magnitude cannot be increased to more than a predetermined amplitude and also because a certain television camera tube cannot emit an electron beam any more if the amplitude of the electron beam exceeds a predetermined value.

An output signal from the white clip circuit 14 is supplied to a line adder circuit 17 formed by a one horizontal period (1H) delay circuit 15 and an adder circuit 16 in which a $\frac{1}{2}f_H$ component is removed by averaging the present signal and the signal of one horizontal period before. The output signal from the line adder circuit 17 is supplied through a gain adjusting circuit 18 and an amplifier 19 to a beam current control electrode $G_1$ of the television camera tube 11. A bias set signal is applied through a terminal 20 to the amplifier 19 whereby a reference bias voltage for the television camera tube 11 is set. That is, the reference beam amplitude or quantity is determined.

According to the circuit arrangement shown in Figure 3, since the $\frac{1}{2}f_H$ component, which will cause oscillation, is removed completely by the line adder circuit 17, the positive oscillation feedback loop is cut off. Accordingly, even if any oscillation is caused and a $\frac{1}{2}f_H$ component thus is generated in the output signal from the television camera tube 11, such line crawl component $\frac{1}{2}f_H$ will not be produced in the beam current control electrode $G_1$ so that the $\frac{1}{2}f_H$ component in the output signal will disappear. Therefore, in contrast to the prior art arrangements mentioned above, it is possible to reduce the adjusting processes for preventing the occurrence of oscillation and avoiding the lack of beam amplitude.

It is sufficient for the frequency characteristic of the delay circuit 15 in the line adder circuit 17 to cover a frequency band of about 1 MHz. Accordingly, it is not necessary (though it is possible) for the delay circuit 15 to comprise an expensive glass delay line; instead, it is possible to use a semiconductor delay circuit such as a charged coupled device (CCD).

In the embodiment of Figure 3, since the diameter of the electron beam is expanded up to the adjacent line, one 1H delay circuit 15 is used to form the line adder circuit 17. However, if the diameter of electron beam becomes larger and the line succeeding the adjacent line must be taken into consideration, the line adder circuit 17 may be formed as shown in Figure 5 or Figure 6.

In the embodiment of Figure 5, the output signal from the white clip circuit 14 (not shown in Figure 5) is supplied to a 1H delay circuit $15_1$ and an adder circuit $16_1$ by which the present signal from the white clip circuit 14 and the signal of one horizontal period before are averaged. Then, this averaged signal is supplied to a 1H delay circuit $15_2$ and an adder circuit $16_2$ by which the present averaged signal and the averaged signal of one horizontal period before are averaged.

In the embodiment of Figure 6, the present signal from the white clip circuit 14 (not shown in Figure 6), the signal of one horizontal period before (from a 1H delay circuit $15_3$) and the signal of two horizontal periods before (from a 1H delay circuit $15_4$ connected downstream of the delay circuit $15_3$) are added by an adder circuit $16_3$. In this case, it is possible to provide level adjusting circuits 21 and 22 for the respective output signals from the delay circuits $15_3$ and $15_4$, whereby an adding ratio in the adder circuit $16_3$ may be adjusted.

The above-described automatic beam current control systems embodying the invention can be applied to both a television camera tube of the single tube type and a television camera tube of the multi-tube type.

According to the embodiments of the invention set forth above, since a line adder circuit is inserted into the feedback loop which feeds back the signal corresponding to the level of the picked-up image output signal to the beam current control electrode of the television camera tube so as thereby to remove the $\frac{1}{2}f_H$ line crawl component which will cause oscillation, the beam amplitude or quantity can be controlled stably without causing oscillation.

Further, since the cause of the oscillation is removed, it is possible to reduce the number of adjusting processes for controlling the amplitude of the electron beam.

## Claims

1. An automatic beam current control system for a television camera in which a beam current is detected from a target electrode of a camera tube (11) and a beam current control signal is supplied to a beam current control electrode $(G_1)$ of the camera tube so as thereby to control the beam current, the system comprising:

beam current detecting means for detecting a beam current from a target current delivered from the target electrode of the camera tube (11);

wave reshape means (13, 14) connected to the beam current detecting means for reshaping a waveform by a non-linear circuit;

line adder means (17) connected to the wave reshape means (13, 14) for generating a beam current control signal by adding a signal of a line scanned by an electron beam and a signal of a line near the former line; and

beam current control electrode drive means (19) connected to be supplied with the beam current control signal for generating an electron beam of a predetermined intensity.

2. A system according to claim 1, in which the line adder means (17) comprises at least one horizontal period delay line (15; $15_1$) and at least one adder (16; $16_1$) arranged to add the beam current of a present line and a beam current of one horizontal period before so as thereby to generate the beam current control signal.

3. A system according to claim 2, in which the line adder means comprises another horizontal period delay line ($15_2$) and another adder ($16_2$), the other delay line ($15_2$) and adder ($16_2$) being connected in cascade with the one delay line ($15_1$) and adder ($16_1$).

4. A system according to claim 1, in which the line adder means (17) comprises two one horizontal period delay lines ($15_3$, $15_4$) and at least one adder ($16_3$) arranged to add the beam current of the present line, the beam current of one horizontal period before and the beam current of two horizontal periods before so as thereby to generate the beam current control signal.

5. A system according to any one of claims 2 to 4, in which the horizontal period delay line or at least one of the horizontal period delay lines comprises a glass delay line.

6. A system according to any one of claims 2 to 4, in which the horizontal period delay line or at least one of the horizontal period delay lines is a semiconductor delay line.

7. A system according to claim 6, in which the semiconductor delay line comprises a charge coupled device.

## Patentansprüche

1. System zur automatischen Strahlstromsteuerung in einer Fernsehkamera, bei dem der Strahlstrom einer Targetelektrode einer Kameraröhre (11) erfaßt wird, und einer Strahlstrom-Steuerelektrode $(G_1)$ der Kameraröhre ein Strahlstrom-Steuersignal zur Steuerung des Strahlstroms zugeführt wird, mit

einer Strahlstrom-Detektoreinrichtung zur Erfassung des von der Targetelektrode der Kameraröhre (11) gelieferten Strahlstroms,

einer mit der Detektoreinrichtung verbundenen Signalformungseinrichtung (13, 14) zur Regenerierung der Signalform mit Hilfe einer nichtlinearen Schaltung,

einer mit Signalformungseinrichtung (13, 14) verbundenen Zeilen-Addiereinrichtung (17) zur Erzeugung eines Strahlstrom-Steuersignals durch Addieren eines Signals einer von einem Elektronenstrahl abgetasteten Zeile und eines Signals einer dieser Zeile benachbarten Zeile,

und einem Treiber (19) für die Strahlstrom-Steuerelektrode $(G_1)$, dem das Strahlstrom-Steuersignal zur Erzeugung eines Elektronenstrahls mit vorbestimmter Intensität zugeführt wird.

2. System nach Anspruch 1, bei dem die Zeilen-Addiereinrichtung (17) wenigstens eine Verzögerungsleitung (15; $15_1$) mit einer Verzögerungszeit von einer Zeilenperiode und wenigstens einen Addierer (16; $16_1$) aufweist, der so angeordnet ist, daß er den Strahlstrom der laufenden Zeile und den um eine Zeilenperiode vorauseilenden Strahlstrom addiert und damit das Strahlstrom-Steuersignal erzeugt.

3. System nach Anspruch 2, bei dem die Zeilen-Addiereinrichtung (17) eine weitere Verzögerungsleitung ($15_2$) mit einer Verzögerungszeit von einer Zeilenperiode und wenigstens einen weiteren Addierer (16₂) aufweist, die mit der einen Verzögerungsleitung (15₁) und dem einen Addierer (16₁) in Kaskade geschaltet sind.

4. System nach Anspruch 1, bei dem die Zeilen-Addiereinrichtung (17) zwei Verzögerungsleitungen (15₃, 15₄) mit jeweils einer Verzögerungszeit von einer Zeilenperiode und wenigstens einen Addierer (16₃) umfaßt, der durch Addition des Strahlstroms der laufenden Zeile, des um eine Zeilenperiode vorauseilenden Strahlstroms und des um zwei Zeilenperioden vorauseilenden Strahlstroms das Strahlstrom-Steuersignal erzeugt.

5. System nach einem der Ansprüche 2 bis 4, bei dem die Verzögerungsleitung oder wenigstens eine der Verzögerungsleitungen eine Glasfaser-Verzögerungsleitung ist.

6. System nach einem der Ansprüche 2 bis 4, bei dem die Verzögerungsleitung oder wenigstens eine der Verzögerungsleitungen eine Halbleiter-Verzögerungsleitung ist.

7. System nach Anspruch 6, bei dem die Halbleiter-Verzögerungsleitung eine ladungsgekoppelte Vorrichtung umfaßt.

**Revendications**

1. Système automatique de contrôle de l'intensité d'un faisceau pour caméra de télévision, uns lequel l'intensité d'un faisceau est détectée à partir d'une électrode-cible d'un tube de caméra (11) et un signal de contrôle d'intensité de faisceau est fourni à une électrode de contrôle d'intensité de faisceau (G₁) du tube de caméra de manière à contrôler l'intensité de faisceau au moyen de celle-ci, le système comprenant:

un moyen détecteur d'intensité de faisceau pour détecter l'intensité d'un faisceau à partir d'un courant de cible délivré par l'électrode-cible du tube de caméra (11);

un moyen de remise en forme d'onde (13, 14) connecté au moyen détecteur d'intensité de faisceau pour remettre en forme une forme d'onde par un circuit non linéaire;

un moyen additionneur de lignes (17) connecté au moyen de remise en forme d'onde (13, 14) pour engendrer un signal de contrôle d'intensité de faisceau en additionnant un signal d'une ligne balayée par un faisceau électronique et un signal d'une ligne près de la première ligne; et

un moyen de commande d'électrode de contrôle d'intensité de faisceau (19) connecté pour recevoir le signal de contrôle d'intensité de faisceau afin de générer un faisceau électronique d'une intensité prédéterminée.

2. Système selon la revendication 1, dans lequel le moyen additionneur de lignes (17) comprend au moins une ligne à retard d'une période horizontale (15; 15₁) et au moins un additionneur (16; 16₁) agencé pour additionner l'intensité de faisceau d'une présente ligne et une intensité de faisceau d'une période horizontale précédente de manière à engendrer le signal de contrôle d'intensité de faisceau au moyen de celui-ci.

3. Système selon la revendication 2, dans lequel le moyen additionneur de lignes comprend une autre ligne à retard d'une période horizontale (15₂) et un autre additionneur (16₂), l'autre ligne à retard (15₂) et l'autre additionneur (16₂) étant connectés en cascade à la ligne à retard (15₁) et à l'additionneur (16₁).

4. Système selon la revendication 1, dans lequel le moyen additionneur de lignes (17) comprend deux lignes à retard d'une période horizontale (15₃, 15₄) et au moins un additionneur (16₃) agencé pour additionner l'intensité de faisceau de la présente ligne, l'intensité de faisceau d'une période horizontale précédente et l'intensité de faisceau de deux périodes horizontales précédentes de manière à engendrer le signal de contrôle d'intensité de faisceau par celui-ci.

5. Système selon l'une quelconque des revendications 2 à 4, dans lequel la ligne à retard d'une période horizontale ou au moins une des lignes à retard d'une période horizontale est constituée par une ligne à retard en verre.

6. Système selon l'une quelconque des revendications 2 à 4, dans lequel la ligne à retard d'une période horizontale ou au moins une des lignes à retard d'une période horizontale est une ligne à retard à semiconducteur.

7. Système selon la revendication 6, dans lequel la ligne à retard à semiconducteur est constituée par un dispositif à couplage de charge.

*FIG. 1*

*FIG. 2*

*FIG. 3*

F I G. 4

F I G. 5

F I G. 6